(19) Europäisches Patentamt / European Patent Office / Office européen des brevets

(11) **EP 4 375 122 B1**

(12) **EUROPEAN PATENT SPECIFICATION**

(45) Date of publication and mention
of the grant of the patent:
**29.04.2026  Bulletin 2026/18**

(21) Application number: **22845395.7**

(22) Date of filing: **21.07.2022**

(51) International Patent Classification (IPC):
*H02J 7/04* (2006.01)        *B60L 53/16* (2019.01)
*G01K 15/00* (2006.01)       *B60L 53/60* (2019.01)
*G01K 7/42* (2006.01)        *H02J 7/00* (2026.01)

(52) Cooperative Patent Classification (CPC):
**H02J 7/975; B60L 53/16; B60L 53/60; G01K 7/42;
H02J 7/80;** H02J 2105/37; Y02T 10/70;
Y02T 10/7072; Y02T 90/12; Y02T 90/14

(86) International application number:
**PCT/CN2022/107009**

(87) International publication number:
**WO 2023/001231 (26.01.2023 Gazette 2023/04)**

(54) **TEMPERATURE COMPENSATION METHOD AND APPARATUS BASED ON DIRECT CURRENT CHARGING BASE**

TEMPERATURKOMPENSATIONSVERFAHREN UND -VORRICHTUNG AUF BASIS EINER GLEICHSTROMLADEBASIS

PROCÉDÉ ET APPAREIL DE COMPENSATION DE TEMPÉRATURE BASÉS SUR UNE BASE DE CHARGE À COURANT CONTINU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **23.07.2021  CN 202110839832**

(43) Date of publication of application:
**29.05.2024  Bulletin 2024/22**

(73) Proprietor: **Jilin Zhong Ying High Technology Co., Ltd.
Jilin 130000 (CN)**

(72) Inventor: **WANG, Chao
Changchun, Jilin 130000 (CN)**

(74) Representative: **Habermann, Hruschka & Schnabel
Patentanwälte
Montgelasstraße 2
81679 München (DE)**

(56) References cited:
EP-A2- 2 502 778        CN-A- 1 578 054
CN-A- 113 459 839       CN-A- 114 088 217
JP-A- 2017 049 229      JP-A- 2020 053 271
JP-A- 2020 053 271      US-A1- 2005 017 691
US-A1- 2013 049 678

# Description

## TECHNICAL FIELD

The present disclosure relates to the technical field of direct current charging of electric vehicles, in particular to a method and apparatus for temperature compensation based on a direct current charging base.

## BACKGROUND

This part aims to provide background or context for the embodiments of the present disclosure as set forth in the claims. The description here is not acknowledged as prior art just because it is included in this part.

With the development of new energy vehicles, to charge the vehicle end safely, accurately and rapidly has become a new market demand. Currently, however, safe, accurate and rapid charging for electric vehicles cannot be ensured because the temperature transmission delay in the charging process will cause temperature errors, resulting in that the collected temperatures of the direct current charging-base terminal are not accurate. A battery ambient temperature estimation device is known from the prior art, for example from JP2020053271A.

## SUMMARY

The present invention is defined by the independent claims. Further embodiments are set forth in the dependent claims. Any references to inventions or embodiments not falling within the scope of the independent claims are to be interpreted as examples useful for understanding the invention. The embodiments of the present disclosure provide a method for temperature compensation based on a direct current charging base, for compensating a temperature error caused by temperature transmission delay, the method including:

collecting a temperature of a direct current charging-base terminal;
calculating temperature compensation function coefficients corresponding to different current values;
obtaining a corrected temperature based on the collected temperature of the direct current charging-base terminal, the temperature compensation function coefficients corresponding to the different current values and a pre-constructed temperature compensation function, and the corrected temperature being sent to a charging controller of an electric vehicle wherein the calculating the temperature compensation function coefficients corresponding to the different current values comprises:
making a current value in direct proportion to a differential value of a temperature, and calculating different current values corresponding to different temperature rise rates; and determining the temperature compensation function coefficients corresponding to the different current values based on the different current values corresponding to the different temperature rise rates.

The embodiments of the present disclosure also provide a device for temperature compensation based on a direct current charging base, for compensating a temperature error caused by temperature transmission delay, the device including:

a temperature collection unit, configured to collect a temperature of a direct current charging-base terminal;
a coefficient calculation unit, configured to calculate temperature compensation function coefficients corresponding to different current values;
a compensation unit, configured to obtain a corrected temperature based on the collected temperature of the direct current charging-base terminal, the temperature compensation function coefficients corresponding to the different current values and a pre-constructed temperature compensation function, the corrected temperature is sent to a charging controller of an electric vehicle.

The embodiments of the present disclosure also provide a computer device, including a memory, a processor, and a computer program stored on the memory and capable of running on the processor, and the processor implements the above-mentioned method for temperature compensation based on a direct current charging base when executing the computer program.

The embodiments of the present disclosure also provide a computer readable storage medium which stores a computer program configured to execute the above-mentioned method for temperature compensation based on a direct current charging base.

Compared with the technical solution of the prior art in which safe, accurate and rapid charging of electric vehicles cannot be ensured because the temperature transmission delay in the charging process will cause temperature errors, resulting in that the collected temperatures of the direct current charging-base terminal are not accurate, the solution of temperature compensation based on a direct current charging base in the embodiments of the present disclosure realizes compensation for the temperature errors caused by temperature transmission delay during charging of electric vehicles, thereby achieving safe, accurate and rapid charging of the vehicles, by collecting a temperature of a direct current charging-base terminal; calculating temperature compensation function coefficients corresponding to different current values; and obtaining a corrected temperature based on the collected temperature of the direct current charging-base terminal, the temperature compensation function coefficients corresponding to the different current values and a pre-constructed temperature compensation function, and the corrected temperature is sent to a charging controller of an electric vehicle.

BRIEF DESCRIPTION OF THE DRAWINGS

The drawings described here are intended to provide further explanation of the present disclosure and constitute a part of the present application, but do not limit to the present disclosure. In the drawings:

FIG. 1 is a schematic diagram illustrating the delay and deviation in phase and amplitude between the temperature measured by the temperature sensor and the actual temperature of the terminal according to an embodiment of the present disclosure;
FIG. 2 is a flow chart of a method for temperature compensation based on a direct current charging base according to an embodiment of the present disclosure;
FIG. 3 is a schematic diagram illustrating the principle of temperature compensation based on a direct current charging base according to an embodiment of the present disclosure;
Fig. 4 is a flow chart of a method for temperature compensation based on a direct current charging base according to another embodiment of the present disclosure;
FIG. 5 is a schematic diagram illustrating the determination of coefficient values by fitting with MATLAB when the charging current is 200A according to an embodiment of the present disclosure;
FIG. 6 is a structure diagram illustrating the apparatus for temperature compensation based on a direct current charging base according to an embodiment of the present disclosure;
Fig. 7 is a structure diagram illustrating the temperature collection unit according to an embodiment of the present disclosure.

DETAILED DESCRIPTION

In order to make the object, technical solutions and advantages of the present disclosure clearer, detail descriptions will be described now be described with reference to the drawings. Here, the exemplary embodiments of the present disclosure and descriptions thereof are used for explaining the present disclosure, not for limiting the present disclosure.

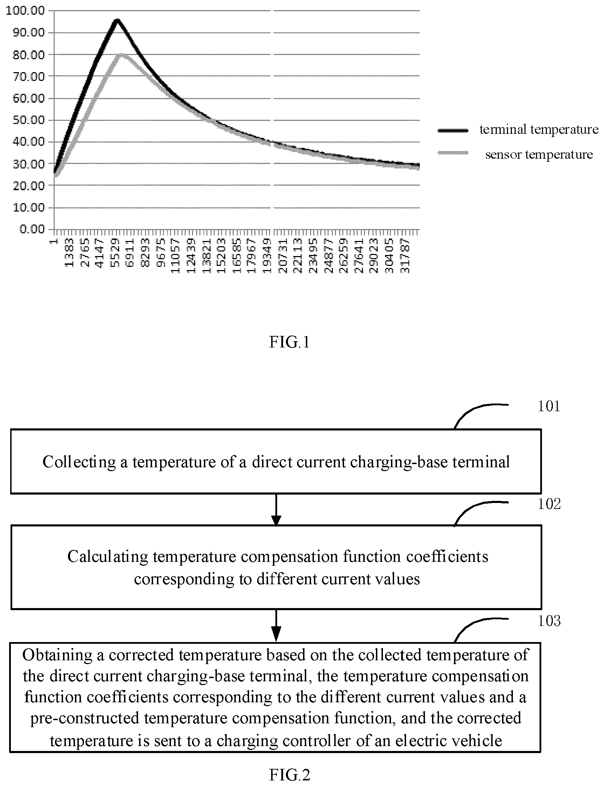

The inventor has found a technical problem: in the direct current charging base, the temperature of the white terminal is measured by the temperature sensor, the temperature sensor is located very close to the terminal but not directly attached to the surface of the terminal, and thus delay and loss are caused when the temperature of the terminal is transmitted to the temperature sensor. As shown in FIG. 1, there is delay and deviation in both phase and amplitude between the temperature measured by the temperature sensor and the actual temperature of the terminal.

Taking into account the above-mentioned technical problem, the inventor proposes a solution of temperature compensation based on a direct current charging base. This solution is a solution of adjusting and compensating an error in temperature caused by temperature transmission delay in the charging process, thereby ensuring safe, accurate and rapid charging of electric vehicles. The solution of temperature compensation based on a direct current charging base is described in detail below.

FIG. 2 is a flow chart of a method for temperature compensation based on a direct current charging base according to an embodiment of the present disclosure. As shown in FIG. 2, the method includes the following steps:

Step 101: collecting a temperature of a direct current charging-base terminal;
Step 102: calculating temperature compensation function coefficients corresponding to different current values;
Step 103: obtaining a corrected temperature based on the collected temperature of the direct current charging-base terminal, the temperature compensation function coefficients corresponding to the different current values and a pre-constructed temperature compensation function, and the corrected temperature is sent to a charging controller of an electric vehicle.

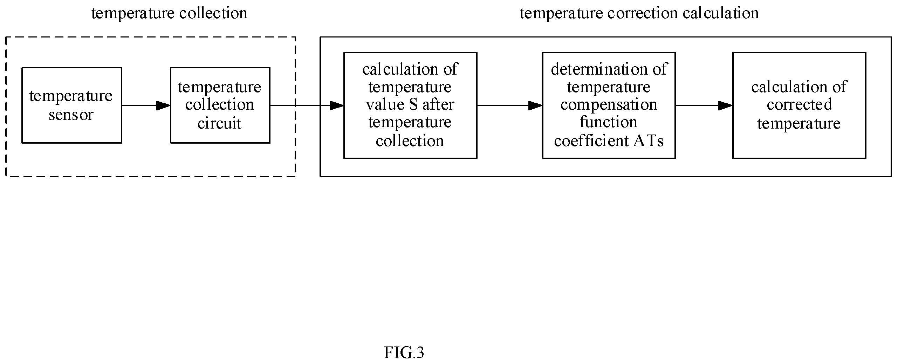

The method for temperature compensation based on a direct current charging base provided in the embodiment of the present disclosure adjusts the error in temperature caused by temperature transmission and loss by differentiation and lag compensator of a software, and ensures that the corrected temperature is accurate and reliable, thereby achieving safe, accurate and rapid charging of vehicles. The steps involved in this method are described in detail below in combination with FIGS. 3-7.

As shown in FIG. 3, the temperature processing process mainly includes following three parts: (1) temperature collection; (2) calculation of temperature compensation function coefficients ATs based on current values; (3) determination of a delay (temperature) compensation function. Specific descriptions are as follows:

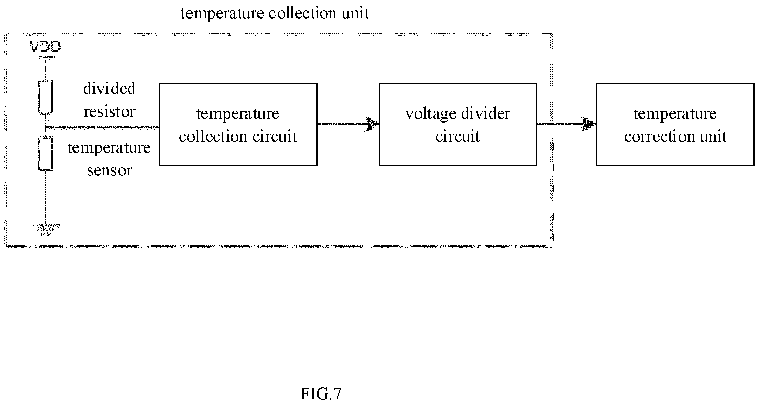

(1) Temperature collection, i.e. the detailed embodiment of the Step 101: in the embodiment of the present disclosure, for the collected temperature of the direct current charging-base terminal, the voltage is subjected to voltage division through a temperature sensor and a divided resistor, and becomes a different voltage after isolation amplification, and then enters a single-chip microcontroller (a temperature correction unit, i.e. the compensation unit described below), and a temperature value S of the voltage corresponding to the temperature sensor is obtained by table look-up (the relationship between voltage and temperature), and the block diagram of the hardware circuit (temperature collection circuit) is shown in FIG. 7. The advantage of performing voltage division through a temperature sensor and a resistance and forming different voltages after isolation amplification is that the interference of the front signal is isolated, the resistance signal is changed into a voltage signal that is easy to collect by the single-chip microcontroller, and thus the safety and accuracy of charging are further improved.

It can be seen from above that, in one embodiment, collecting the temperature of the direct current charging-base terminal includes collecting the temperature of the direct current charging-base terminal using a temperature collection unit including:

a divided resistor, a first end of which is connected to a 5V voltage end converted from a 12V voltage of the vehicle end;
a temperature sensor, a first end of which is connected to a second end of the divided resistor and a second end of the temperature sensor is grounded, to collect a voltage signal of the direct current charging-base terminal;
a temperature collection circuit, an input end of which is connected to the first end of the temperature sensor, so as to isolate the voltage signal collected by the temperature sensor and obtain a voltage after isolation processing;
a voltage divider circuit, an input end of which is connected to an output end of the temperature collection circuit, for converting the voltage after isolation processing into an effective voltage signal that is easy to collect; the effective voltage signal that is easy to collect is configured to determine a temperature value corresponding to the voltage collected by the temperature sensor based on the pre-constructed relationship between voltage and temperature, and the temperature value is taken as the temperature of the direct current charging-base terminal.

In specific implementation, the temperature obtained by the temperature collection unit is more accurate, so that the accuracy and safety of temperature compensation for the direct current charging base is further improved.

(2) Calculation of compensation function coefficients ATs based on current values: the current range of flowing through the charging-base terminal is 100A-500A. For different currents, the squared value of the current is in direct proportional to the increase in temperature. The current value is made in direct proportional to the differential value of temperature by way of calculating the differential. Finally, there is a correspondence relationship between the ATs and the temperature rise rate. However, due to the non-linearity of the temperature rise rates corresponding to the currents in different segments in the calibration process, the currents obtained by different temperature rise rates after subsequent segmentation have different KK, bb, and thus the K, b corresponding to the ATs subsequently obtained based on different currents are also different. The advantage of making the current value in direct proportion to the differential value of temperature is that, when the external conditions are not changed, the current value is determined to be in a linear relationship with the temperature rise rate, the differential value of temperature=temperature difference/time difference, the differential value of temperature corresponds to the slope of temperature rise over a period of time (temperature rise rate, temperature change rate), and by actually measuring the slope K1 of temperature rise under 100A and the slope K2 of temperature rise under 500A, the different current values ya corresponding to the slopes x of different temperature rises can be calculated using the linear formula $y=KKx+bb$, where, $KK=(500-100)/(k2-k1)$, bb is a constant, y is the current value ya corresponding to the slopes of different temperature rises. The ATs is determined by the coefficient obtained after fitting the tested temperature curve corresponding to the actual fixed charging current to a standard temperature with MATLAB. When the current is 500A, the corresponding ATs is set as ATs-500, and when the current is 100A, the corresponding ATs is set as ATs-100. Therefore, the delay compensated ATs under different currents ya satisfy the correspondence relationship formula: $ATs=ya \times K+b$, where, $K=((ATs-500)-(ATs-100))/(500-100)$, where, ATs is the temperature compensation function coefficient, ya is the current value, and K and b are constants determined by actual measurement. For accuracy of measurement, different K and b coefficients are calculated using the same formula for the over-limit current of 500A-700A and the current of 50A-100A below the working current, and separate correction is performed to calculate different ATs.

It can be seen from above that, the calculating the temperature compensation function coefficients corresponding to the different current values may include:

making a current value in direct proportion to a differential value of a temperature, and calculating different current values corresponding to different temperature rise rates; and
determining the temperature compensation function coefficients corresponding to the different current values based on the different current values corresponding to the different temperature rise rates.

It can be seen from above that, in one embodiment, calculating the temperature compensation function coefficients corresponding to the different current values may include calculating the temperature compensation function coefficients corresponding to different current values using a formula including:

$$ATs=ya \times K+b$$

where, $K=((ATs\text{-}500)\text{-}(ATs\text{-}100))/(500\text{-}100)$, ATs is the temperature compensation function coefficient, ya is the current value, and K and b are constants.

It can be seen from above that, in one embodiment, different K and b is calculated based on the over-limit current range of 500A-700A and the range of 50A-100A below the working current.

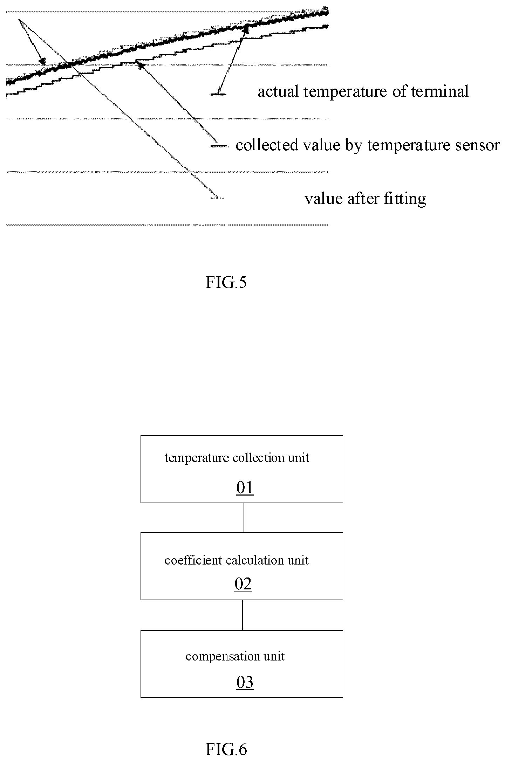

(3) Determination of a delay (temperature) compensation function: in the testing process, due to the transmission delay and loss of temperature, the temperature is compensated. The formula for compensation is a first-order delay function formula as follows: $y2=(1+Ts \times S)/(1+Ats \times S)$. In this formula, Ts is a constant, ATs is a variable in direct proportional to the current in the process of temperature rise, S is a current sampling temperature value (the temperature of the direct current charging-base terminal), where, the Ts and ATs are determined by the coefficient obtained after fitting the tested temperature curve corresponding to the actual fixed charging current to a standard temperature with MATLAB, the parameter Ts is fixed, and different ATs values corresponding to different currents are obtained, and the different ATs values are retrieved corresponding to different temperature change rates in the delay compensation calculation. FIG. 5 is a schematic diagram illustrating the determination of the coefficient value by fitting with MATLAB when the charging current is 200A.

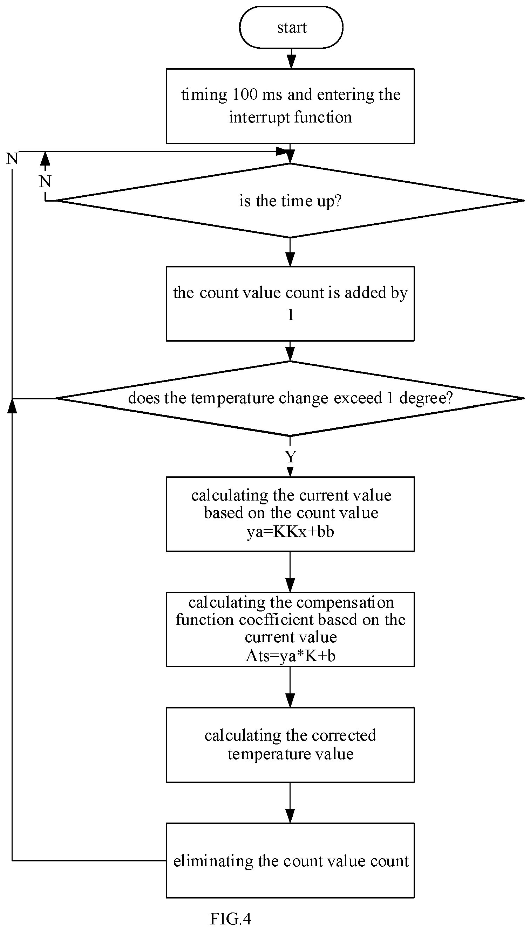

(4) The flow chart of the whole temperature correction is shown in FIG. 4. The temperature-corrected value (the corrected temperature) is sent via a CAN cable to a charge controller CCU of a vehicle, and the charge controller CCU of the vehicle may safely, accurately and rapidly charge the electric vehicle by using the corrected temperature.

In the specific implementation, on the basis that the sampling temperature, the temperature compensation function and the temperature compensation function coefficients are determined, the final corrected temperature is determined using the temperature correction formula, and the corrected temperature is sent to the charge controller of the electric vehicle.

In conclusion, the embodiments of the present disclosure realize the following: the vehicle is charged stably and rapidly; the errors are corrected simply and rapidly using software, that is, the sampling temperature values under different currents are corrected simply, rapidly and practically by differentiation and lag correction of software.

The embodiments of the present disclosure have the following advantageous technical effect: the method for temperature compensation based on a direct current charging base provided in the embodiments of the present disclosure realizes the compensation of temperature errors caused by temperature transmission delay during charging of electric vehicles, thereby realizes safe, accurate and rapid charging of the vehicles.

The embodiments of the present disclosure also provide an apparatus for temperature compensation based on a direct current charging base, as described in the following embodiment. Since the principle of solving the problem of the apparatus is similar to that of the method for temperature compensation based on a direct current charging base, reference can be made to the implementation of the method for temperature compensation based on a direct current charging base for the implementation of the apparatus, and the detailed descriptions will not be repeated here.

FIG. 6 is a schematic diagram illustrating the structure of the apparatus for temperature compensation based on a direct current charging base in an embodiment of the present disclosure, the apparatus including:

a temperature collection unit 01, configured to collect a temperature of a direct current charging-base terminal;

a coefficient calculation unit 02, configured to calculate temperature compensation function coefficients corresponding to different current values;

a compensation unit 03, configured to obtain a corrected temperature based on the collected temperature of the direct current charging-base terminal, the temperature compensation function coefficients corresponding to the different current values and a pre-constructed temperature compensation function, and the corrected temperature is sent to a charging controller of an electric vehicle.

In one embodiment, as shown in FIG. 7, the temperature collection unit may include:

a divided resistor, a first end of which is connected to a 5V voltage end converted from a 12V voltage of the vehicle end;

a temperature sensor, a first end of which is connected to a second end of the divided resistor and a second end is grounded, to collect a voltage signal of the direct current charging-base terminal;

a temperature collection circuit, an input end of which is connected to the first end of the temperature sensor, for isolating the voltage signal collected by the temperature sensor and obtain a voltage after isolation processing;

a voltage divider circuit, an input end of which is connected to an output end of the temperature collection circuit, for converting the voltage after isolation processing into an effective voltage signal that is easy to collect; the effective voltage signal that is easy to collect is configured to determine a temperature value corresponding to the voltage collected by the temperature sensor based on a pre-constructed relationship between voltage and temperature, and the temperature value is taken as the temperature of the direct current charging-base terminal.

The coefficient calculation unit may be specifically configured to:

make a current value in direct proportion to a differential value of temperature, and calculating different current values corresponding to different temperature rise rates; and
determine temperature compensation function coefficients corresponding to the different current values based on the different current values corresponding to the different temperature rise rates.

In one embodiment, the coefficient calculation unit may be specifically configured to calculate the temperature compensation function coefficients corresponding to the different current values using a formula including:

$$ATs = ya \times K + b$$

where, ATs is the temperature compensation function coefficient, ya is the current value, and K and b are constants.

In one embodiment, different K and b are calculated based on the over-limit current range of 500A-700A and the range of S0A-100A below the working current.

The embodiments of the present disclosure also provide a computer device, including a memory, a processor, and a computer program stored on the memory and capable of running on the processor, and the above-mentioned method for temperature compensation based on a direct current charging base is implemented when the processor executes the computer program.

The embodiments of the present disclosure also provide a computer readable storage medium which stores a computer program that implements the above-mentioned method for temperature compensation based on a direct current charging base.

Compared with the technical solution of the prior art in which safe, accurate and rapid charging of electric vehicles cannot be ensured because the temperature transmission delay in the charging process will cause temperature errors, resulting in that the collected temperatures of the direct current charging-base terminal are not accurate, the solution of temperature compensation based on a direct current charging base in the embodiments of the present disclosure realizes compensation for the temperature errors caused by temperature transmission delay during charging of electric vehicles, thereby achieving safe, accurate and rapid charging of the vehicles, by collecting a temperature of a direct current charging-base terminal; calculating temperature compensation function coefficients corresponding to different current values; and obtaining a corrected temperature based on the collected temperature of the direct current charging-base terminal, the temperature compensation function coefficients corresponding to the different current values and a pre-constructed temperature compensation function, and the corrected temperature is sent to a charging controller of an electric vehicle.

The persons skilled in the art shall understand that the embodiments of the present disclosure may be provided as a method, a system, or a computer program product. Therefore, the present disclosure may take the form of a complete hardware embodiment, a complete software embodiment, or an embodiment of a combination of software and hardware. Moreover, the present disclosure may take the form of a computer program product implemented on one or more computer available storage medium (including, but not limited to, disk memory, CD-ROM, optical memory, etc.) including computer-available program codes.

The present disclosure is described with reference to the flow charts and/or block diagrams of the method, apparatus (system) and computer program product according to the embodiments of the present disclosure. It should be understood that each process and/or block in the flow chart and/or block diagram, as well as the combination of the processes and/or blocks in the flow chart and/or block diagram, may be implemented by computer program instructions. These computer program instructions may be provided to the processor of a general-purpose computer, a specialized computer, an embedded processing machine, or other programmable data processing devices to produce a machine such that the instructions executed by the processor of the computer or other programmable data processing devices produce a device for implementing the functions specified in one or more processes in the flow chart and/or one or more blocks in the block diagram.

These computer program instructions may also be stored in a computer readable memory capable of directing a computer or other programmable data processing devices to work in a particular manner such that the instructions stored in the computer readable memory produce a manufactured product including an instructing device that implements the functions specified in one or more processes in the flow chart and/or one or more blocks in the block diagram.

These computer program instructions may also be loaded onto a computer or other programmable data processing devices such that a series of operation steps are performed on the computer or other programmable devices to produce computer-implemented processing, so that the instructions executed on the computer or other programmable devices provide steps for implementing the functions specified in one or more processes in the flow chart and/or one or more blocks in the block diagram.

The above-mentioned specific embodiments further explain the object, technical solutions and advantageous effects of the present disclosure. It should be understood that the above is merely the specific embodiments of the present disclosure, and is not used to limit the protection scope of the present disclosure.

**Claims**

1. A method for temperature compensation based on a direct current charging base, wherein the method comprises:

   collecting a temperature of a direct current charging-base terminal;

   **characterized in that** the method for temperature compensation based on a direct current charging base further comprises:

      calculating temperature compensation function coefficients corresponding to different current values;

      obtaining a corrected temperature based on the collected temperature of the direct current charging-base terminal, the temperature compensation function coefficients corresponding to the different current values, and a pre-constructed temperature compensation function, and the corrected temperature is sent to a charging controller of an electric vehicle,

      wherein the calculating the temperature compensation function coefficients corresponding to the different current values comprises:

         making a current value in direct proportion to a differential value of a temperature, and calculating different current values corresponding to different temperature rise rates; and

         determining the temperature compensation function coefficients corresponding to the different current values based on the different current values corresponding to the different temperature rise rates.

2. The method for temperature compensation based on a direct current charging base according to claim 1, wherein the collecting the temperature of a direct current charging-base terminal comprises collecting the temperature of a direct current charging-base terminal using a temperature collection units comprising:

   a divided resistor, a first end of which is connected to a voltage end of a vehicle;

   a temperature sensor, a first end of which is connected to a second end of the divided resistor and a second end is grounded, to collect a voltage signal of the direct current charging-base terminal;

   a temperature collection circuit, an input end of which is connected to the first end of the temperature sensor, so as to isolate the voltage signal collected by the temperature sensor and obtain a voltage after isolation processing; and

   a voltage divider circuit, an input end of which is connected to an output end of the temperature collection circuit, for converting the voltage after isolation processing into an effective voltage signal that is easy to collect, the effective voltage signal that is easy to collect is configured to determine a temperature value corresponding to the voltage collected by the temperature sensor based on a pre-constructed relationship between voltage and temperature, and the temperature value is taken as the temperature of the direct current charging-base terminal.

3. The method for temperature compensation based on a direct current charging base according to claim 1, wherein the calculating the temperature compensation function coefficients corresponding to the different current values comprises calculating the temperature compensation function coefficients corresponding to the different current values by a formula comprising:

$$ATs = ya \times K + b$$

   where, ATs is the temperature compensation function coefficient, ya is the current value, and K and b are constants.

4. The method for temperature compensation based on a direct current charging base according to claim 3, wherein the different K and b are calculated based on an over-limit current range of 500A-700A and a range of 50A-100A below a working current.

5. A apparatus for temperature compensation based on a direct current charging base, wherein the apparatus comprises:

   a temperature collection unit (01) configured to collect a temperature of a direct current charging-base terminal;

   **characterized in that** the apparatus for temperature compensation based on a direct current charging base further comprises:

      a coefficient calculation unit (02) configured to calculate temperature compensation function coefficients corresponding to different current values; and

a compensation unit (03) configured to obtain, based on the collected temperature of the direct current charging-base terminal, the temperature compensation function coefficients corresponding to the different current values and a pre-constructed temperature compensation function, a corrected temperature which is configured to be sent to a charging controller of an electric vehicle;

wherein the coefficient calculation unit (02) is specifically configured to:

make a current value in direct proportion to a differential value of temperature, and calculating different current values corresponding to different temperature rise rates; and

determine the temperature compensation function coefficients corresponding to the different current values based on the different current values corresponding to the different temperature rise rates.

6. The apparatus for temperature compensation based on a direct current charging base according to claim 5, wherein the temperature collection unit (01) comprises:

a divided resistor, a first end of which is connected to a voltage end of a vehicle;

a temperature sensor, a first end of which is connected to a second end of the divided resistor and a second end is grounded, to collect a voltage signal of the direct current charging-base terminal;

a temperature collection circuit, an input end of which is connected to the first end of the temperature sensor, for isolating the voltage signal collected by the temperature sensor and obtain a voltage after isolation processing;

a voltage divider circuit, an input end of which is connected to an output end of the temperature collection circuit, for converting the voltage after isolation processing into an effective voltage signal that is easy to collect, the effective voltage signal that is easy to collect is configured to determine a temperature value corresponding to the voltage collected by the temperature sensor based on a pre-constructed relationship between voltage and temperature, and the temperature value is taken as the temperature of the direct current charging-base terminal.

7. The apparatus for temperature compensation based on a direct current charging base according to claim 5, wherein the coefficient calculation unit (02) is specifically configured to calculate the temperature compensation function coefficients corresponding to the different current values by a formula comprising:

$$ATs = ya \times K + b$$

where, ATs is the temperature compensation function coefficient, ya is the current value, and K and b are constants.

8. The apparatus for temperature compensation based on a direct current charging base according to claim 7, wherein the different K and b are calculated based on an over-limit current range of 500A-700A and a range of 50A-100A below a working current.

9. A computer device, comprising a memory, a processor, and a computer program stored on the memory and capable of running on the processor, wherein the processor implements the method according to any one of claims 1 to 4 when executing the computer program.

10. A computer readable storage medium, wherein the computer readable storage medium stores a computer program that executes the method according to any one of claims 1 to 4.

**Patentansprüche**

1. Verfahren zur Temperaturkompensation auf der Grundlage einer Gleichstrom-Ladestation, wobei das Verfahren aufweist:

Erfassen einer Temperatur eines Anschlusses der Gleichstrom-Ladestation;
**dadurch gekennzeichnet, dass** das Verfahren zur Temperaturkompensation auf der Grundlage einer Gleichstrom-Ladestation des Weiteren aufweist:

Berechnen von Temperaturkompensationsfunktionskoeffizienten, die verschiedenen Stromwerten entsprechen;
Ermitteln einer korrigierten Temperatur auf der Grundlage der erfassten Temperatur des Anschlusses der Gleichstrom-Ladestation, der Temperaturkompensationsfunktionskoeffizienten, die den verschiedenen Stromwerten entsprechen, und einer vorab erstellten Temperaturkompensationsfunktion, wobei die korrigierte Temperatur an eine Ladesteuerung eines Elektrofahrzeugs gesendet wird,

wobei das Berechnen der Temperaturkompensationsfunktionskoeffizienten, die den verschiedenen Stromwerten entsprechen, aufweist:

Setzen eines Stromwerts, der in direktem Verhältnis zu einem Temperaturdifferenzwert steht, und Berechnen verschiedener Stromwerte, die verschiedenen Temperaturanstiegsraten entsprechen; und

Bestimmen der Temperaturkompensationsfunktionskoeffizienten, die den verschiedenen Stromwerten entsprechen, auf der Grundlage der verschiedenen Stromwerte, die den verschiedenen Temperaturanstiegsraten entsprechen.

2. Verfahren zur Temperaturkompensation auf der Grundlage einer Gleichstrom-Ladestation gemäß Anspruch 1, bei dem das Erfassen der Temperatur eines Anschlusses der Gleichstrom-Ladestation das Erfassen der Temperatur eines Anschlusses der Gleichstrom-Ladestation unter Verwendung einer Temperaturerfassungseinheit aufweist, die Folgendes aufweist:

einen geteilten Widerstand, dessen erstes Ende mit einem Spannungsanschluss eines Fahrzeugs verbunden ist;

einen Temperatursensor, dessen erstes Ende mit einem zweiten Ende des geteilten Widerstands verbunden ist und dessen zweites Ende geerdet ist, um ein Spannungssignal des Anschlusses der Gleichstrom-Ladestation zu erfassen;

eine Temperaturerfassungsschaltung, deren Eingangsende mit dem ersten Ende des Temperatursensors verbunden ist, um das vom Temperatursensor erfasste Spannungssignal zu isolieren und eine Spannung nach der Isolationsverarbeitung zu erhalten; und

eine Spannungsteilerschaltung, deren Eingangsende mit einem Ausgangsende der Temperaturerfassungsschaltung verbunden ist, um die Spannung nach der Isolationsverarbeitung in ein leicht zu erfassendes Effektivspannungssignal umzuwandeln, wobei das leicht zu erfassende Effektivspannungssignal so konfiguriert ist, dass es einen Temperaturwert bestimmt, der der vom Temperatursensor erfassten Spannung entspricht, basierend auf einer vorab festgelegten Beziehung zwischen Spannung und Temperatur, und wobei der Temperaturwert als die Temperatur des Anschlusses der Gleichstrom-Ladestation angenommen wird.

3. Verfahren zur Temperaturkompensation auf der Grundlage einer Gleichstrom-Ladestation gemäß Anspruch 1, bei dem das Berechnen der Temperatur-

turkompensationsfunktionskoeffizienten, die den verschiedenen Stromwerten entsprechen, das Berechnen der Temperaturkompensationsfunktionskoeffizienten, die den verschiedenen Stromwerten entsprechen, anhand einer Formel aufweist, die Folgendes beinhaltet:

$$ATs = ya \times K + b$$

wobei ATs der Temperaturkompensationsfunktionskoeffizient ist, ya der Stromwert ist und K und b Konstanten sind.

4. Verfahren zur Temperaturkompensation auf der Grundlage einer Gleichstrom-Ladestation gemäß Anspruch 3, bei dem die unterschiedlichen Werte von K und b auf der Grundlage eines Überstrombereichs von 500 A bis 700 A und eines Bereichs von 50 A bis 100 A unterhalb eines Arbeitsstroms berechnet werden.

5. Vorrichtung zur Temperaturkompensation auf der Grundlage einer Gleichstrom-Ladestation, wobei die Vorrichtung aufweist:

eine Temperaturerfassungseinheit (01), die so konfiguriert ist, dass sie eine Temperatur eines Anschlusses der Gleichstrom-Ladestation erfasst; **dadurch gekennzeichnet, dass** die Vorrichtung zur Temperaturkompensation auf der Grundlage einer Gleichstrom-Ladestation des Weiteren aufweist:

eine Koeffizientenberechnungseinheit (02), die so konfiguriert ist, dass sie Temperaturkompensationsfunktionskoeffizienten entsprechend verschiedenen Stromwerten berechnet; und

eine Kompensationseinheit (03), die so konfiguriert ist, dass sie auf der Grundlage der erfassten Temperatur des Anschlusses der Gleichstrom-Ladestation die Temperaturkompensationsfunktionskoeffizienten, die den verschiedenen Stromwerten entsprechen, und einer vorab erstellten Temperaturkompensationsfunktion eine korrigierte Temperatur ermittelt, die so konfiguriert ist, dass sie an eine Ladesteuerung eines Elektrofahrzeugs gesendet wird;

wobei die Koeffizientenberechnungseinheit (02) insbesondere dazu ausgelegt ist:

einen Stromwert in direktem Verhältnis zu einem Temperaturdifferenzwert zu setzen und verschiedene Stromwerte entsprechend verschiedenen Temperaturanstiegsraten zu berechnen; und

die Temperaturkompensationsfunktionskoeffizienten, die den verschiedenen Stromwerten entsprechen, auf der Grundlage der verschiedenen Stromwerte, die den verschiedenen Temperaturanstiegsraten entsprechen, zu bestimmen.

6. Vorrichtung zur Temperaturkompensation auf Basis einer Gleichstrom-Ladeeinrichtung nach Anspruch 5, bei der die Temperaturerfassungseinheit (01) aufweist:

einen geteilten Widerstand, dessen erstes Ende mit einem Spannungsanschluss eines Fahrzeugs verbunden ist;

einen Temperatursensor, dessen erstes Ende mit einem zweiten Ende des geteilten Widerstands verbunden ist und dessen zweites Ende geerdet ist, um ein Spannungssignal des Anschlusses der Gleichstrom-Ladestation zu erfassen;

eine Temperaturerfassungsschaltung, deren Eingangsende mit dem ersten Ende des Temperatursensors verbunden ist, um das vom Temperatursensor erfasste Spannungssignal zu isolieren und eine Spannung nach der Isolationsverarbeitung zu erhalten;

eine Spannungsteilerschaltung, deren Eingangsende mit einem Ausgangsende der Temperaturerfassungsschaltung verbunden ist, um die Spannung nach der Isolierungsverarbeitung in ein leicht zu erfassendes Effektivspannungssignal umzuwandeln, wobei das leicht zu erfassende Effektivspannungssignal so konfiguriert ist, dass es einen Temperaturwert bestimmt, der der vom Temperatursensor erfassten Spannung entspricht, basierend auf einer vorab festgelegten Beziehung zwischen Spannung und Temperatur, und wobei der Temperaturwert als die Temperatur des Anschlusses der Gleichstrom-Ladestation angenommen wird.

7. Vorrichtung zur Temperaturkompensation auf der Grundlage einer Gleichstrom-Ladestation gemäß Anspruch 5, bei der die Koeffizientenberechnungseinheit (02) speziell dazu ausgelegt ist, die Temperaturkompensationsfunktionskoeffizienten entsprechend den verschiedenen Stromwerten anhand einer Formel zu berechnen, die Folgendes beinhaltet:

$$ATs = ya \times K + b$$

wobei ATs der Koeffizient der Temperaturkompensationsfunktion ist, ya der Stromwert ist und K und b Konstanten sind.

8. Vorrichtung zur Temperaturkompensation auf Basis einer Gleichstrom-Ladestation gemäß Anspruch 7, bei der die unterschiedlichen Werte von K und b auf der Grundlage eines Überstrombereichs von 500 A bis 700 A und eines Bereichs von 50 A bis 100 A unterhalb eines Arbeitsstroms berechnet werden.

9. Computervorrichtung, aufweisend einen Speicher, einen Prozessor und ein auf dem Speicher gespeichertes und auf dem Prozessor ausführbares Computerprogramm, wobei der Prozessor bei Ausführung des Computerprogramms das Verfahren gemäß einem der Ansprüche 1 bis 4 implementiert.

10. Computerlesbares Speichermedium, wobei das computerlesbare Speichermedium ein Computerprogramm speichert, das das Verfahren gemäß einem der Ansprüche 1 bis 4 ausführt.

**Revendications**

1. Procédé de compensation de température basé sur une station de recharge à courant continu, ledit procédé comprenant:

collecter d'une température d'une borne de la station de recharge à courant continu;
**caractérisé en ce que** le procédé de compensation de température basé sur une station de recharge à courant continu comprend en outre:

calculer de coefficients de fonction de compensation de température correspondant aux différentes valeurs de courant;
déterminer d'une température corrigée sur la base de la température détectée de la borne de la station de recharge à courant continu, des coefficients de fonction de compensation de température correspondant aux différentes valeurs de courant et d'une fonction de compensation de température établie au préalable, la température corrigée étant transmise à un contrôleur de recharge d'un véhicule électrique, le calcul des coefficients de la fonction de compensation de température correspondant aux différentes valeurs de courant comprenant:

mettre d'une valeur de courant directement proportionnelle à une valeur de différence de température, et calculer de différentes valeurs de courant correspondant à différents taux d'augmentation de température; et
déterminer des coefficients de la fonction de compensation de température correspondant aux différentes valeurs de courant, sur la base des différentes valeurs de courant correspondant aux différents taux d'augmentation de température.

2. Procédé de compensation de température basé sur une station de recharge à courant continu selon la revendication 1, dans lequel collecter de la température d'une borne de la station de recharge à courant continu comprend la détection de la température d'une borne de la station de recharge à courant continu à l'aide d'une unité de détection de température comprenant:

une résistance divisée dont la première extrémité est connectée à une borne de tension d'un véhicule;
un capteur de température dont la première extrémité est connectée à une deuxième extrémité de la résistance divisée et dont la deuxième extrémité est mise à la terre, afin de détecter un signal de tension de la borne de la station de recharge à courant continu;
un circuit de détection de température dont l'extrémité d'entrée est connectée à la première extrémité du capteur de température, afin d'isoler le signal de tension détecté par le capteur de température et d'obtenir une tension après le traitement d'isolation; et
un circuit diviseur de tension dont l'extrémité d'entrée est connectée à une extrémité de sortie du circuit de détection de température afin de convertir la tension issue du traitement d'isolation en un signal de tension efficace facile à détecter, le signal de tension efficace facile à détecter étant configuré de manière à déterminer une valeur de température correspondant à la tension détectée par le capteur de température, sur la base d'une relation prédéfinie entre la tension et la température, et la valeur de température étant considérée comme la température de la borne de la station de recharge à courant continu.

3. Procédé de compensation de température basé sur une station de recharge à courant continu selon la revendication 1, dans lequel le calcul des coefficients de la fonction de compensation de température correspondant aux différentes valeurs de courant comprend le calcul des coefficients de la fonction de compensation de température correspondant aux différentes valeurs de courant à l'aide d'une formule comprenant:

$$\text{ATs} = \text{ya} \times \text{K} + \text{b}$$

où ATs est le coefficient de la fonction de compensation de température, ya est la valeur du courant et K et b sont des constantes.

4. Procédé de compensation de température basé sur une station de recharge à courant continu selon la revendication 3, dans lequel les différentes valeurs de K et b sont calculées sur la base d'une plage de surintensité de 500 A à 700 A et d'une plage de 50 A à 100 A en dessous d'un courant de fonctionnement.

5. Appareil de compensation de température basé sur une station de recharge à courant continu, l'appareil comprenant:

une unité de détection de température (01) configurée pour détecter une température d'une borne de la station de recharge à courant continu; **caractérisé en ce que** l'appareil de compensation de température basé sur une station de recharge à courant continu comprend en outre:
une unité de calcul de coefficients (02) configurée pour calculer des coefficients de fonction de compensation de température correspondant aux différentes valeurs de courant; et
une unité de compensation (03) configurée pour déterminer, sur la base de la température mesurée au niveau du connecteur de la borne de recharge en courant continu, les coefficients de la fonction de compensation de température correspondant aux différentes valeurs de courant, et d'une fonction de compensation de température préétablie, détermine une température corrigée, qui est configurée pour être transmise à un contrôleur de charge d'un véhicule électrique;
l'unité de calcul des coefficients (02) étant notamment conçue pour:

mettre une valeur de courant en relation directe avec une valeur de différence de température et calculer différentes valeurs de courant correspondant à différents taux d'augmentation de température; et
déterminer les coefficients de la fonction de compensation de température correspondant aux différentes valeurs de courant, sur la base des différentes valeurs de courant correspondant aux différents taux d'augmentation de température.

6. Appareil de compensation de température basé sur une station de recharge à courant continu selon la revendication 5, dans lequel l'unité de détection de température (01) comprend:

une résistance divisée dont la première extrémité est connectée à une borne de tension d'un véhicule;
un capteur de température dont la première extrémité est connectée à une deuxième extrémité de la résistance divisée et dont la deuxième extrémité est mise à la terre, afin de détecter un signal de tension provenant de la borne de la station de recharge à courant continu;

un circuit de détection de température dont l'extrémité d'entrée est reliée à la première extrémité du capteur de température, afin d'isoler le signal de tension détecté par le capteur de température et d'obtenir une tension après le traitement d'isolation;

un circuit diviseur de tension dont l'extrémité d'entrée est connectée à une extrémité de sortie du circuit de détection de température, afin de convertir la tension après le traitement d'isolation en un signal de tension efficace facile à détecter, le signal de tension efficace facile à détecter étant configuré de manière à déterminer une valeur de température correspondant à la tension détectée par le capteur de température, sur la base d'une relation prédéfinie entre la tension et la température, et la valeur de température étant considérée comme la température de la borne de la station de recharge à courant continu.

7. Appareil de compensation de température basé sur une station de recharge à courant continu selon la revendication 5, dans lequel l'unité de calcul de coefficients (02) est spécialement conçue pour calculer les coefficients de la fonction de compensation de température en fonction des différentes valeurs de courant à l'aide d'une formule comprenant:

$$ATs = ya \times K + b$$

où ATs est le coefficient de la fonction de compensation de température, ya est la valeur du courant et K et b sont des constantes.

8. Appareil de compensation de température basé sur une station de recharge à courant continu selon la revendication 7, dans lequel les différentes valeurs de K et b sont calculées sur la base d'une plage de surintensité de 500 A à 700 A et d'une plage de 50 A à 100 A en dessous d'un courant de fonctionnement.

9. Appareil informatique comprenant une mémoire, un processeur et un programme informatique stocké dans la mémoire et exécutable sur le processeur, le processeur mettant en œuvre, lors de l'exécution du programme informatique, le procédé selon l'une des revendications 1 à 4.

10. Support de stockage lisible par ordinateur, ledit support de stockage lisible par ordinateur stockant un programme informatique qui exécute le procédé selon l'une des revendications 1 à 4.

FIG.1

FIG.2

temperature correction calculation

temperature collection

| temperature collection circuit |

| temperature sensor |

| calculation of temperature value S after temperature collection |

| determination of temperature compensation function coefficient ATs |

| calculation of corrected temperature |

FIG.3

FIG.4

actual temperature of terminal

collected value by temperature sensor

value after fitting

FIG.5

temperature collection unit

01

coefficient calculation unit

02

compensation unit

03

FIG.6

temperature collection unit

FIG.7

**EP 4 375 122 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020053271 A